# EUROPEAN PATENT APPLICATION

(11) **EP 1 759 917 A2**
(43) Date of publication of application: **07.03.2007**
(21) Application number: 06015982.9
(22) Date of filing: 01.08.2006
(51) Int. Cl.: B60N 2/427, B60N 2/28

(54) **Child car seat**

(30) Priority: 31.08.2005 JP 2005251760; 22.03.2006 JP 2006079064
(71) Applicant: TAKATA CORPORATION, Minato-ku, Tokyo 106-8510 (JP)
(72) Inventor: Nakagawa, Osamu, Minato-ku Tokyo 106-8510 (JP)
(74) Representative: Banzer, Hans-Jörg

(57) **Abstract**

In order to provide a child car seat in which a seat body (1) is prevented from rattling, a shell, a shell holder and a base (40) are integrated to assemble a child car seat first and then the child car seat is placed on a seat cushion (71) of a vehicle seat and rear ends of ISO-FIX arms (43) are mounted to ISO-FIX anchors (70). In case of front collision, the locking by a lock mechanism (60) is released, and the base (40) rotates in the sinking direction about the anchor (70) of the vehicle. However the seat body (1) rotates in a direction indicated by an arrow (U) about hook shafts (26) relatively with respect to the base (40) by a static inertia thereof to maintain a state before collision, in which a seatback section stays in the upright position.

## Description

### Technical Field

The present invention relates to a child car seat and, more specifically, to a child car seat including a base arranged on a seat cushion and connected to an anchor provided on a vehicle, and a seat body mounted to the base.

### Background Art

As a child car seat of this type, there is a child car seat of an ISO-FIX type, which is standardized by International Organization for Standardization (for example, Japanese Unexamined Patent Application Publication No. 2004-106668).

The child car seat of the ISO-FIX type described in the publication shown above is configured in such a manner that a base is placed on a seat cushion, and the base is connected to an anchor bar provided on a vehicle body. The base has upright members on both left and right side portions thereof, and a seat body is supported on upper portions of the upright members via a shaft.

The seat body is secured to the base by a rubber band, so as not to rotate normally. When a force equal to or larger than a predetermined magnitude is applied to the seat body toward the front in case of vehicle collision or the like, the seat body rotates while expanding the rubber band.

### Disclosure of the Invention

### Problems to be Solved by the Invention

In Japanese Unexamined Patent Application Publication No.2004-106668 described above, since the seat body is secured to the base with the rubber band, it rattles due to vibrations of the vehicle, so that it is not comfortable to seat for a child.

It is an object of the present invention to provide a child car seat in which a seat body is prevented from rattling.

### Means for Solving the Problems

This object is achieved by a child car seat according to Claim 1. The dependent claims define preferred or advantageous embodiments of the child car seat.

A child car seat according to the present invention includes a base arranged on a seat cushion of a vehicle and connected to an anchor provided on the vehicle; and a seat body rotatably supported with respect to the base by a supporting shaft having an axial line oriented in the lateral direction of the child car seat, the base being formed with upright members respectively extending upright from both left and right sides of the base, the seat body being rotatably supported by upper portions of the upright members via the supporting shaft, and the seat body being locked with respect to the base by a lock mechanism to be prevented from rotating, characterized in that the lock mechanism is adapted to unlock when a forward force equal to or larger than a predetermined magnitude is applied to the seat body to allow the seat body to rotate.

In the child car seat of the present invention, the seat body is locked to the base with the lock mechanism, and hence the seat body is firmly secured to the base unless the forward force equal to or larger than the predetermined magnitude is applied.

When the forward force equal to or larger than the predetermined magnitude is applied in association with the vehicle collision or the like, the lock by the lock mechanism is released, and the seat body rotates about the supporting shaft. Accordingly, since the seat body is maintained in a posture similar that before the vehicle collision by its stationary inertia, the load applied to the child seated on the seat body is alleviated.

The lock mechanism may include: an engaged member provided on the seat body; an engaging member provided on the base and being displaceable between a posture of engaging with the engaged member and a disengaging posture; and an urging member for urging the engaging member to bring the same into the engaging posture.

In this case, the engaging member urged by the urging member engages with the engaged member, and hence the connection to the base of the seat body is extremely secured.

The engaging member may be displaced against an urging force by the urging member when the forward force equal to or large than the predetermined magnitude is applied to the seat body to disengage the engaging member from the engaged member.

In this case, when the forward force equal to or larger than the predetermined magnitude is applied to the seat body, the engaging member is displaced to take the disengaging posture against the urging force by the urging member, whereby-the engagement between the engaging member and the engaged member is released.

The engaged member may be a lock bar provided on a bottom surface portion of the seat body and extending in the lateral direction of the child car seat, wherein the engaging member is rotatably supported to the base by an axis having an axial line oriented in the lateral direction of the child car seat, the engaging member is provided with a lock bar receiving groove extending in parallel with the axial line of the axis, and the seat body is locked when the lock bar is engaged with the lock bar receiving groove and is located at a level lower than the axis and the seat body is unlocked when the engaging member is rotated so that the lock bar is positioned in front of the axis.

In this case, the lock is achieved by engaging the lock bar provided on the bottom portion of the seat body with the lock bar receiving groove of the engaging member rotatably provided on the base. This structure is relatively simple and in addition, the lock is firm. The lock is released by rotating the engaging member so that the lock bar receiving groove is positioned forward.

A projecting portion projecting upward may be provided on an upper surface of the base, and the engaging member is arranged inside the projecting portion, and in that the projecting portion is formed with a slit so as to allow the lock bar to enter therein and to be engaged with the engaging member.

In this case, the fact that the member to be engaged with the lock bar is the slit of the projecting portion can be recognized clearly, and hence the mounting operation of the seat body to the base is facilitated.

A recess for allowing the projecting portion to enter therein may be formed on a bottom surface of the seat body, wherein the lock bar is provided so as to extend across the recess.

When the recess is provided on the bottom surface of the seat body so that the projecting portion is entered into the recess, the portion of the bottom surface of the seat body other than the recess can be formed into a flat surface so as to allow the seat body to abut against the upper surface of the base over a wide area.

The slit may be provided on a front surface and both side surfaces of the projecting portion in sequence, wherein the slit on the side surfaces of the projecting portion includes an inclined slit portion inclining downward as it goes toward the rear and an inner most slit portion continuing from the inclined slit portion and extending rearward substantially in parallel with the fore-and-aft direction of the base.

In this case, the lock bar is entered to the innermost slit portion in the state in which the seat body is locked. When the lock is released, the lock bar comes out from the slit through the inclined slit portion in association with the rotation of the engaging member.

The supporting shaft may be provided on the seat body, the upright member being formed with a bearing recess for receiving the supporting shaft from above, wherein a bottom portion of the bearing recess extends in the fore-and-aft direction so as to allow the supporting shaft to move forward when the seat body is moved forward, an entrance of the bearing recess is smaller in width in the fore-and-aft direction than the bottom portion, and
a pressing member is provided for pressing the supporting shaft in the bearing recess rearward.

In this case, the supporting shaft is located on the rear portion of the recess in a stationary state. When the forward force equal to or larger than the predetermined magnitude is applied to the seat body in case of vehicle collision or the like, the supporting shaft moves forward along the bottom portion of the bearing recess. Since the width of the entrance portion of the bearing recess is smaller than the bottom portion in the fore-and-aft direction, when the supporting shaft moves in the recess toward the front, the supporting shaft is prevented from coming apart upward from the bearing recess, whereby the seat body rotates about the supporting shaft.

When the supporting shaft moves forward in the bearing recess in this manner, and hence the seat body is moved forward, the lock bar moves form the innermost slit portion to the inclined slit portion. Then, the lock bar is moved in the inclined slit portion in association with the rotation of the seat body, and at least comes off from the slit, and hence the seat body is further rotated.

When the supporting shaft is provided on the seat body, the upright member may also be formed with an elongated hole extending in the fore-and-aft direction for allowing insertion of the supporting shaft,
a pressing member being provided for pressing the supporting shaft in the elongated hole toward the rear.

In this case, the supporting shaft is located on the rear portion in the elongated hole on the upright member in the stationary state. When the forward force equal to or larger than the predetermined magnitude is applied to the seat body in case of vehicle collision or the like, the supporting shaft moves forward in the elongated hole. In this manner, when the supporting shaft moves forward in the elongated hole and hence the seat body is moved forward, the lock bar moves from the innermost slit portion to the inclined slit portion. Then, the lock bar moves in the inclined slit portion in association with the rotation of the seat body, and at last comes off from the slit, and hence the seat body is further rotated.

Alternatively, when the supporting shaft is provided on the seat body, the supporting shaft may be inserted through an elongated hole formed on the seat body so as to extend in the fore-and-aft direction,
a pressing member being provided for pressing the supporting shaft in the elongated hole toward the front.

In this case, the supporting shaft is located on the front portion in the elongated hole of the seat body in the stationary state. When the forward force equal to or larger than the predetermined magnitude is applied to the seat body in case of vehicle collision or the like, the supporting shaft moves rearward in the elongated hole. In this manner, when the supporting shaft moves rearward in the elongated hole and hence the seat body is moved forward, the lock bar moves from the innermost slit portion to the inclined slit portion. Then, the lock bar moves in the inclined slit portion in association with the rotation of the seat body, and at last, comes off from the slit, and hence the seat body is further rotated.

In another embodiment, the engaged member is a lock bar provided on the bottom surface portion of the seat body and extending in the lateral direction of the child car seat, the engaging member includes a base body portion supported by the base at the lower end thereof so as to be capable of rotating about the axis having the axial line extending in the lateral direction of the child car seat and an overhung portion overhung from the upper end side of the base body portion toward the front, an upper surface of the overhung portion is an inclined surface having a downslope toward the front, the urging member urges the upper end side of the base body portion toward the front, wherein, when the lock bar is moved downward with respect to the engaging member from above, the lock bar comes into abutment with the inclined surface of the overhung portion and is moved downward to a level lower than the overhung portion while pushing the overhung portion backward against the urging force from the urging member, and then the overhung portion is restored toward the front by the urging force of the urging member and is engaged with the upper side of the lock bar, whereby the seat body is locked with respect to the base.

In this case, the lock bar is engaged with the base so as to be latched by the engaging member by moving the lock bar downward from above with respect to the engaging member. Therefore, the connecting operation to the base of the seat body can be facilitated. The mechanism of the child car seat in Claim 11 is also easy.

When the forward force equal to or larger than the predetermined magnitude is applied to the seat body in a state in which the lock bar is engaged by the engaging member, the lock bar comes off forward from the lower side of the overhung portion of the engaging member, whereby the lock between the seat body and the base is released, and the seat body is rotated.

### Brief Description of the Drawings

Fig. 1 is a perspective view of the front side of a child car seat according to an embodiment.
Fig. 2 is a perspective view of the back side of a seat body.
Fig. 3 is a perspective view of a base.
Fig. 4 is a perspective view of the child car seat from the upper rear side.
Fig. 5 is a perspective view of the child car seat from the lower rear side.
Fig. 6 is a side view of the child car seat.
Fig. 7 is a center vertical cross-sectional view of the child car seat.
Fig. 8 is a block diagram of a hook mechanism.
Fig. 9 is a cross-sectional view for explaining an operation of the hook mechanism.
Fig. 10 is a cross-sectional perspective view of a lock mechanism.
Fig. 11 is a cross-sectional view for explaining an operation of the lock mechanism.
Fig. 12 is an explanatory drawing showing an operation of the child car seat in case of front collision.
Fig. 13 is a block diagram showing another embodiment.
Fig. 14 is a block diagram showing still another embodiment.
Fig. 15 is an explanatory drawing showing an operation of the child car seat according to yet another embodiment.
Fig. 16 is a perspective view showing the lock mechanism between the seat body and the base of the child car seat in Fig. 15.
Fig. 17 is a cross-sectional view taken along a line XVII-XVII in Fig. 16.
Fig. 18 is a cross-sectional view of the lock mechanism being in the course of locking the seat body to the base of the child car seat in Fig. 15.
Fig. 19 is a cross-sectional view of the lock mechanism in a state of being unlocked from the base of the seat body of the child car seat in Fig. 15.

### Embodiments of the Invention

Referring now to the drawings, embodiments will be described.

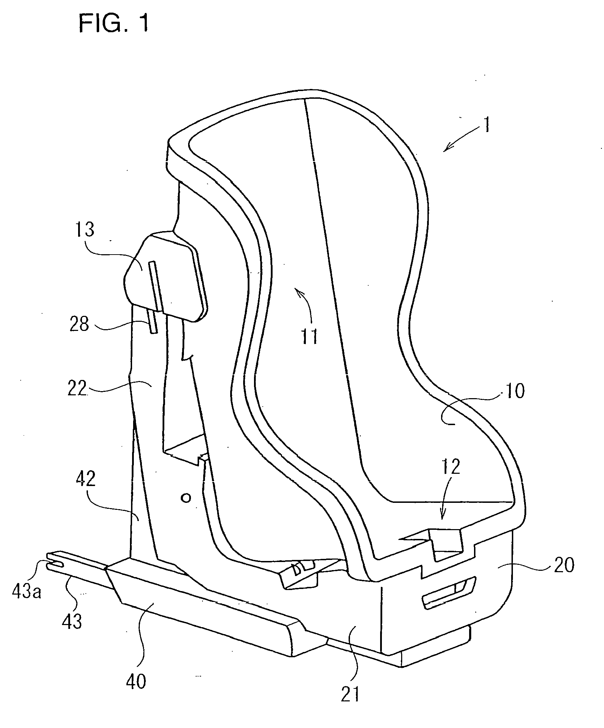

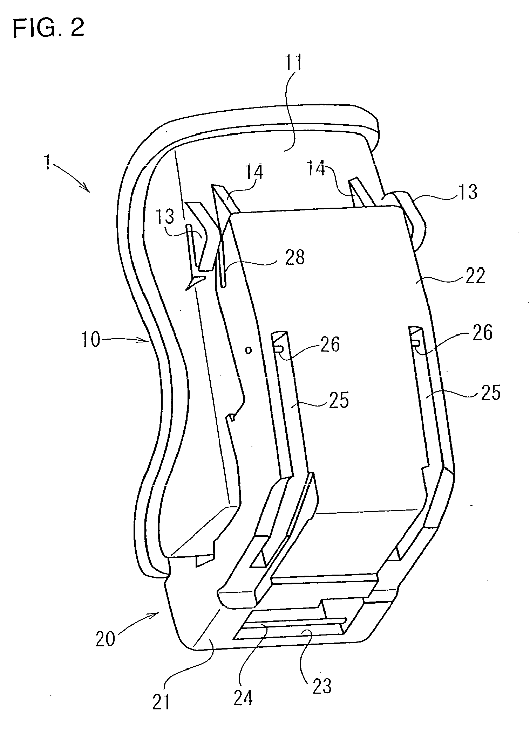

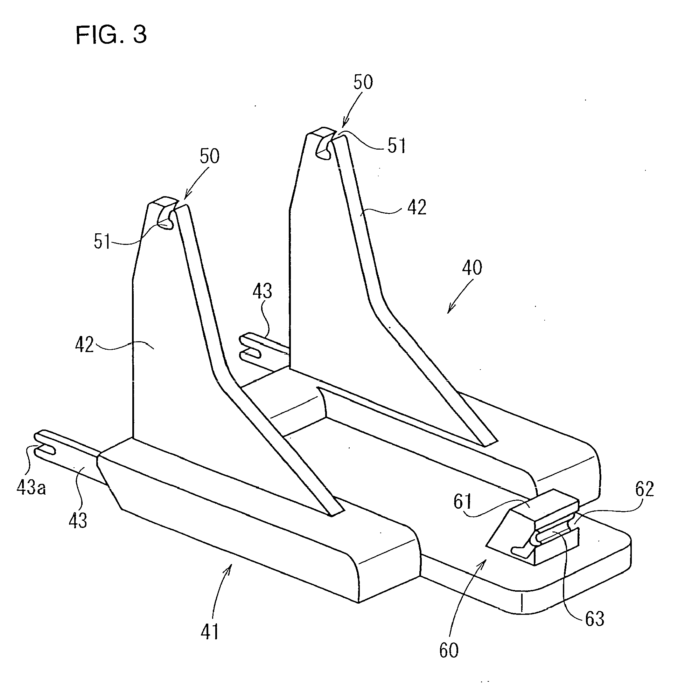

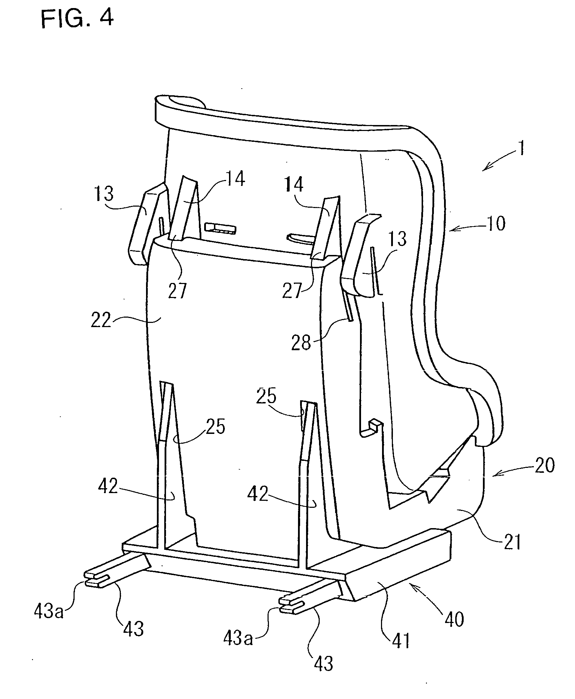

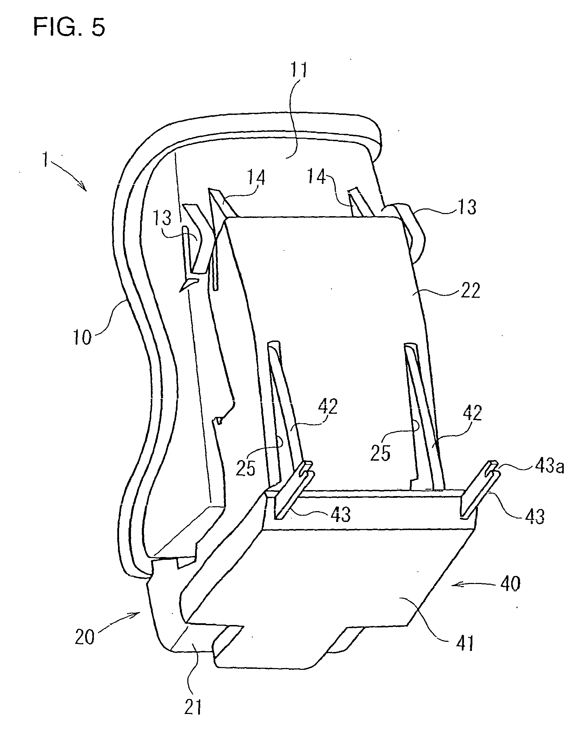

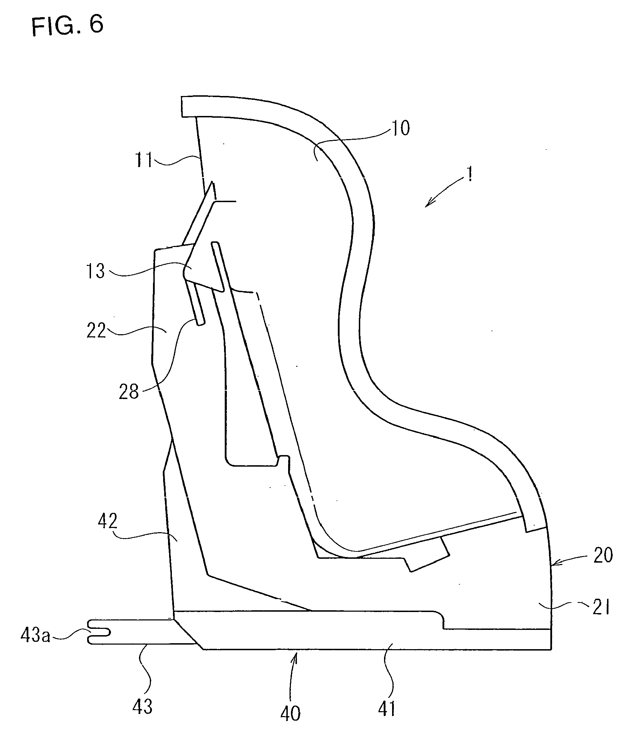

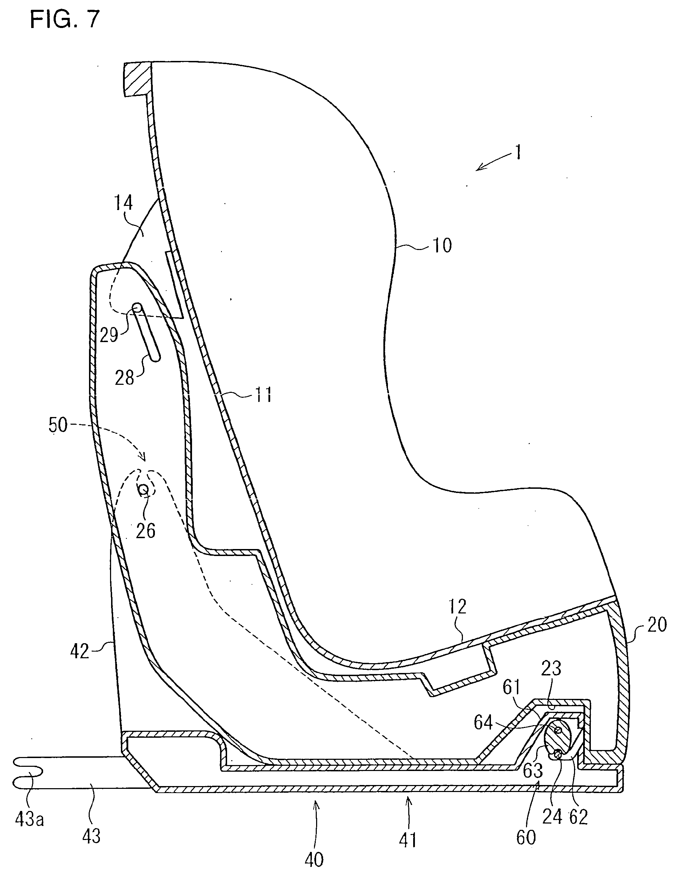

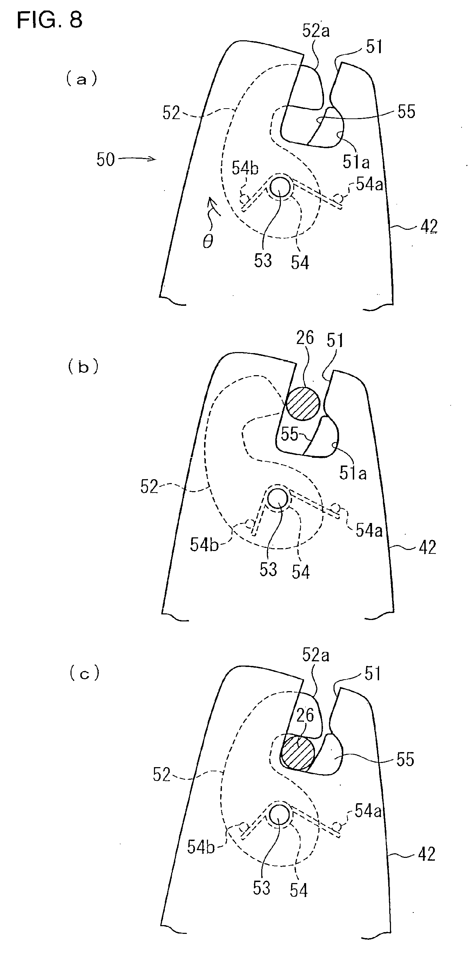

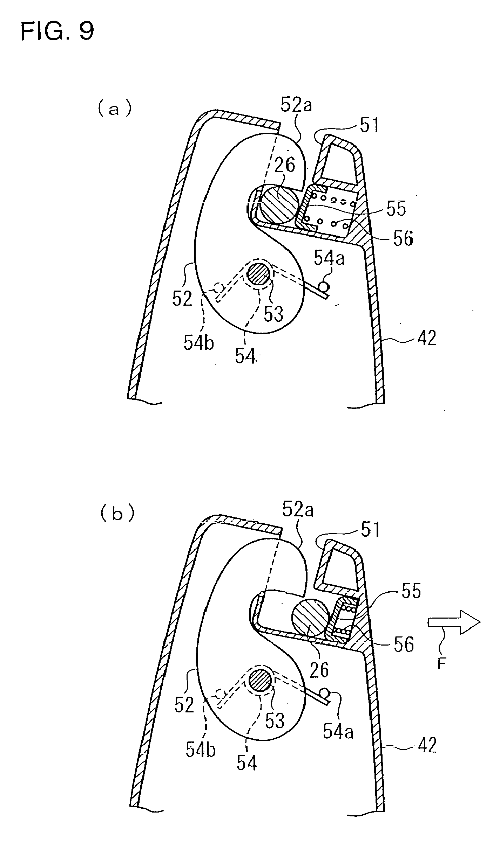

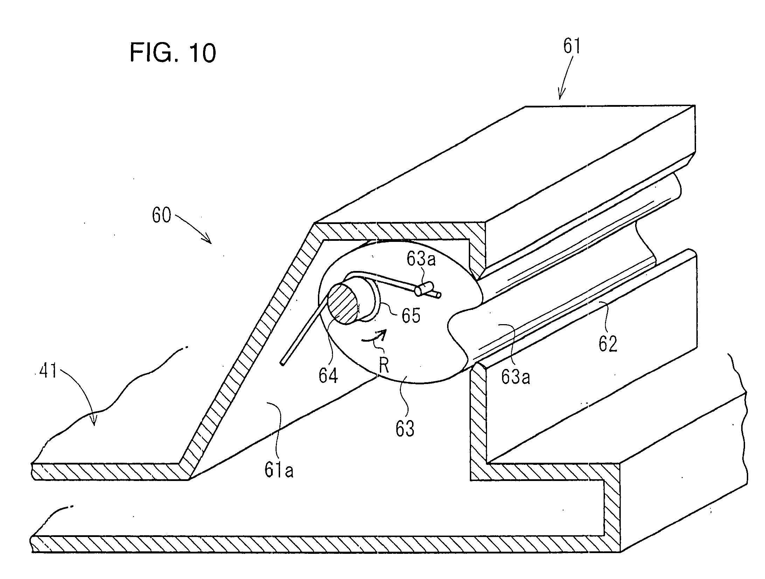

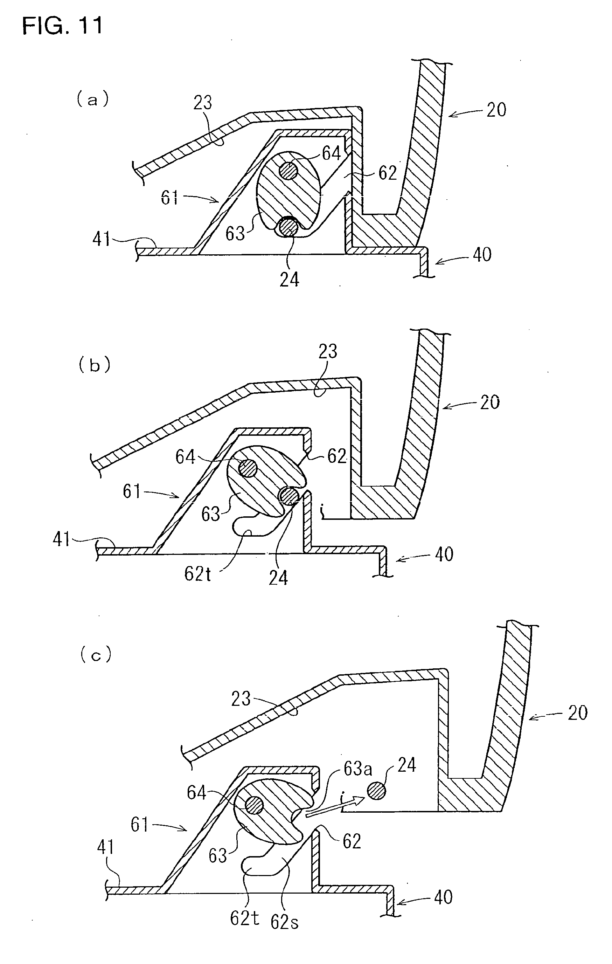

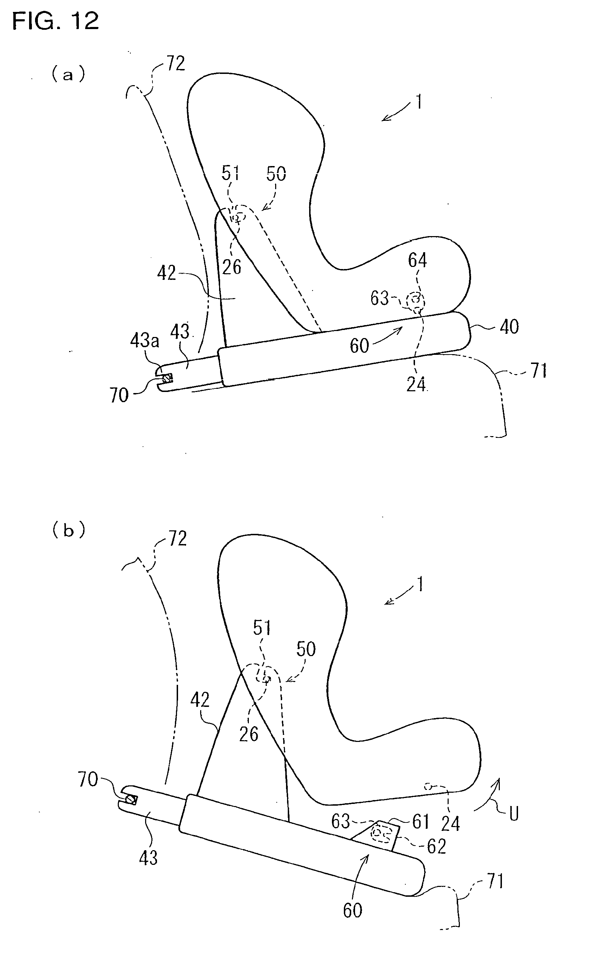

Fig. 1 is a perspective view of the front side of a child car seat according to an embodiment; Fig. 2 is a perspective view of the back side of a seat body; Fig. 3 is a perspective view of a base; Fig. 4 is a perspective view of the child car seat from the upper rear side; Fig. 5 is a perspective view of the child car seat from the lower rear side; Fig. 6 is a side view of the child car seat; Fig. 7 is a center vertical cross-sectional view of the child car seat; Fig. 8 is a block diagram of a hook mechanism; Fig. 9 is a cross-sectional view for explaining an operation of the hook mechanism; Fig. 10 is a cross-sectional perspective view of a lock mechanism; Fig. 11 is a cross-sectional view for explaining an operation of the lock mechanism; and Fig. 12 is an explanatory drawing showing an operation of the child car seat in case of front collision.

The child car seat includes a seat body 1 and a base 40 to which the seat body 1 is connected. The seat body 1 includes a shell 10 having a seatback section 11 and a seating section 12, and a shell holder 20 for supporting the shell 10 so as to be capable of being reclined.

Pairs of projecting strips 13, 14 are provided so as to project rearwardly from both left and right sides of the seatback section 11 of the shell 10 respectively.

As shown in Fig. 2, the shell holder 20 is substantially formed into a generally L-shape in side view having a holder base 21 arranged on an lower side of the seating section 12 and a holder back 22 extending upright from a rear portion of the holder base 21 and rising along a back surface of the seatback section 11.

A recess 23 which is depressed upward is provided on a front portion of a bottom surface of the holder base 21. A lock bar 24 as an engaged member extending in the lateral widthwise direction of the holder base 21 is provided in the recess 23. The lock bar 24 is fixed at both ends thereof to the holder base 21.

Grooves 25 are provided from the holder back 22 to the holder base 21, and hook shafts 26 as supporting shafts extending in the lateral widthwise direction of the child car seat are provided in upper portions in the grooves 25.

As shown in Fig. 4, guide grooves 27 extending in the vertical direction are provided on the front side of the holder back 22, and the projecting strips 14 are engaged with the guide grooves 27. Slots 28 which reach the guide grooves 27 are provided on side surfaces of the holder back 22. Pins 29 (Fig. 7) extending between the projecting strips 13, 14 are inserted into the slots 28, whereby the seatback portion 11 of the shell 10 is connected to the holder back 22 so as to be capable of moving in the vertical direction.

The seating section 12 of the shell 10 is connected to the holder base 21 via a reclining mechanism, not shown, so as to be capable of sliding in the fore-and-aft direction. A stopper mechanism is built in the reclining mechanism, and the shell 10 is fixed to the shell holder 20 by the stopper mechanism. When a stopper of the stopper mechanism is operated, the reclining angle of the shell 10 can be adjusted.

The base 40 includes, as shown in Fig. 3, a plate-shaped base body 41 arranged on the seat cushion of the vehicle seat, side towers 42 as upright members extending upright from both left and right sides of the base body 41, ISO-FIX arms 43 extending rearward from both left and right ends on the rear surface of the base body 41 respectively, hook mechanisms 50 provided at upper end portions of the side towers 42, and a locking mechanism 60 provided on a front upper surface of the base body 41. Joint portions 43a with respect to the ISO-FIX anchors of the vehicle are provided at rear ends of the arms 43.

As clearly shown in Figs. 8 and 9, the hook mechanism 50 includes a bearing recess 51 formed so as to break into the side tower 42 downward from an upper end thereof, a hook 52 rotatably mounted to the side tower 42 via an axis 53 so that a distal end side 52a thereof is capable of rising and setting from/into the bearing recess 51, a helical spring 54 wound around the axis 53 for urging the hook 52, a shaft holding member 55 arranged on a bottom portion in the bearing recess 51, and a spring 56 for pressing the shaft holding member 55.

The hook 52 is a member of substantially a C-shape, and the proximal end side thereof is pivotably supported by the side tower 42 via the axis 53. The both ends of the axis 53 are supported by the side towers 42. The distal end side 52a of the hook 52 is urged by the spring 54 so as to be exposed in the bearing recess 51 in a direction indicated by an arrow θ in Fig. 8(a). One end side of the spring 54 is hooked on a spring receiving projection 54a of the side tower 42, and the other end side is hooked on the spring receiving projection 54b of the hook 52.

The hook shaft 26 of the holder base 21 is mounted into the bearing recess 51. When fitting the hook shaft 26 from above into the bearing recess 51, as shown in Fig. 8(b), the hook 52 is pressed and rotates in a direction opposite from θ. When the hook shaft 26 gets into the bearing recess 51 to the bottom portion thereof, the distal end side 52a of the hook 52 moves to the upper side of the hook shaft 26 by an urging force of the spring 54, so that the upward movement of the hook shaft 26 is prevented. Although not shown, a release lever is mounted to the hook 52 for rotating the hook 52 in the direction opposite from θ, so that the base 41 can be removed from the shell holder 20.

The bottom portion of the bearing recess 51 is formed with a forward extending portion 51a so that the width of the bottom portion of the bearing recess 51 in the fore-and-aft direction is larger than the entrance side. The shaft holding member 55 is arranged in the forward extending portion 51a so as to be capable of moving in the fore-and-aft direction (the lateral direction in Fig. 8). The spring 56 is arranged so as to urge the shaft holding member 55 rearwardly. As shown in Fig. 8(c), the shaft holding member 55 comes into abutment with the hook shaft 26 which is broken into the innermost portion of the bearing recess 51. The spring 56 moves the shaft holding member 55 forward (rightward in Fig. 8) by being compressed as shown in Fig. 9(b) when a force equal to or larger than a predetermined magnitude is applied thereto in association with the front collision of the vehicle or the like. In the stationary state, as shown in Fig. 8(c) and Fig. 9(a), the hook shaft 26 is pressed against the inner surface of the bearing recess 51 on the rear side by the shaft holding member 55.

Referring now to Figs. 10 and 11, a configuration of the lock mechanism 60 will be described.

An upward projecting portion 61 is provided on an upper surface of the front portion of the base body 41, and a slit 62 is provided from a front surface of the projecting portion 61 to both left and right side surfaces. The slit 62 has a vertical width that can allow insertion of the lock bar 24 of the holder base 21. A side portion of the slit 62 provided on the side surface of the projecting portion 61 includes an inclined slit portion 62s extending downward as it goes rearward and an innermost slit portion 62t which continues from the inclined slit portion 62s and extends rearward substantially in parallel with the upper surface of the base body 41.

The inclined slit portion 62a extends in a generally constant-radius position with respect to the forward extending portion 51a of the bearing recess 51.

An engaging member 63 is arranged in the projecting portion 61, and is rotatably supported by an axis 64. The engaging member 63 has substantially an elliptic cylinder shape having the longitudinal direction of the elliptic cylinder directed in the widthwise direction of the base 40. A lock bar receiving groove 62a is provided along one side of the engaging member 63. The axis 64 penetrates through the other side of the engaging member 63.

The axis 64 extends in the lateral widthwise direction of the base 40, and the both ends thereof are supported by the projecting portion 61. A helical spring 65 is wound around the axis 64. One end of the spring 65 abuts against a rear surface 61a of the projecting portion 61, and the other end is hooked with a spring receiving projection 63a provided on a side end surface of the engaging member 63. The spring 65 urges the engaging member 63 in the direction indicated by an arrow R in Fig. 10.

In a state in which the lock bar 24 is not mounted and no external force is applied, the engaging member 63 abuts against the upper surface of the projecting portion 61, and the lock bar receiving groove 63a faces the slit 62 on the front surface of the projecting portion 61.

The lock bar 24 of the shell holder 20 passes through the slit 62 and is engaged with the lock bar receiving groove 63a. When the shell holder 20 is pressed obliquely rearward and downward from this state, the lock bar 24 enters into the innermost slit portion 62t as shown in Fig. 11 (a) .

An assembling method, a usage, and an operation in case of the front collision of the child car seat configured as described above will be described.

Firstly, the shell 10, the shell holder 20 and the ISO-FIX base 40 are assembled into a unit as shown in Fig. 1. Normally, the shell 10 and the shell holder 20 are integrated first, and this integrated member is mounted to the base 40. At the time of mounting, the lock bar 24 of the shell holder 20 is entered into the innermost slit portion 62t to achieve a state shown in Fig. 11(a), and then the hook shaft 26 of the shell holder 20 is fitted into the bearing recess 51 from above to achieve a state shown in Fig. 8(c).

In this manner, after having assembled the shell 10, the shell holder 20 and the base 40 integrally into the child car seat, the child car seat is placed on a seat cushion 71 of the vehicle seat and the rear ends of the ISO-FIX arm 43 are attached to ISO-FIX anchors 70 of the vehicle as shown in Fig. 12(a). Accordingly, the child car seat can be used. Reference numeral 72 in Fig. 12 designates a seatback of the vehicle.

In a state in Fig. 12(a), the lock bar 24 is in a state shown in Fig. 11(a), and upward movement thereof is prevented by the engaging member 63. When the lock bar 24 tries to move forward, since the shell holder 20 is held in the bearing recesses 51 via the hook shaft 26, it tries to rotate obliquely upward about the hook shaft 26 in a state shown in Fig. 9(a) (the state in which the hook shaft 26 is located on the rear end side of the bearing recess 51). However, in the state shown in Fig. 11(a), since the lock bar 24 is engaged with the innermost slit portion 62t extending substantially in the horizontal direction, the lock bar 24 abuts against a portion around a ceiling of the innermost slit portion 62t, and hence the rotation is prevented. Therefore, the shell holder 20 is immovable both upward and forward with respect to the base 40.

When the vehicle collides at the front in a state in which a child is seated on the child car seat and constrained with a webbing for child (not shown), as shown in Fig. 12(b), the entire child car seat tries to rotate in the direction of sinking downward about the ISO-FIX anchors 70. At this time, a force is applied forward to the seat body 1, and the hook shafts 26 compress the spring 56 and moves forward as shown in Fig. 9(b). Then, the lock bar 24 also moves forward in the innermost slit portion 62t correspondingly and reaches the inclined slit portion 62s.

Then, since the inclined slit portion 62s extends in a generally constant-radius position from the hook shaft 26 in this state, the lock bar 24 moves in the inclined slit portion 62s about the hook shaft 26, as shown in Fig. 11(b). Then, at last it comes out from the slit 62 as shown in Fig. 11 (c) .

Consequently, the base 40 rotates in the sinking direction about the anchor 70. However, the seat body 1 rotates about the hook shaft 26 in the direction indicated by an arrow U in Fig. 12(b) relatively with respect to the base 40 by its stationary inertia, and maintains a state before the collision in which the seatback section 11 is in the upright position. Accordingly, the load of the child seated on the seat body 1 is alleviated.

In this embodiment, the hook shaft 26 is immovably maintained by the hook mechanism 50 in the stationary state shown in Fig. 12(a), and the lock bar 24 is immovably maintained by the lock mechanism 60. Therefore, the rattling of the seat body 1 is not generated, and hence a comfortable seat for a child is achieved.

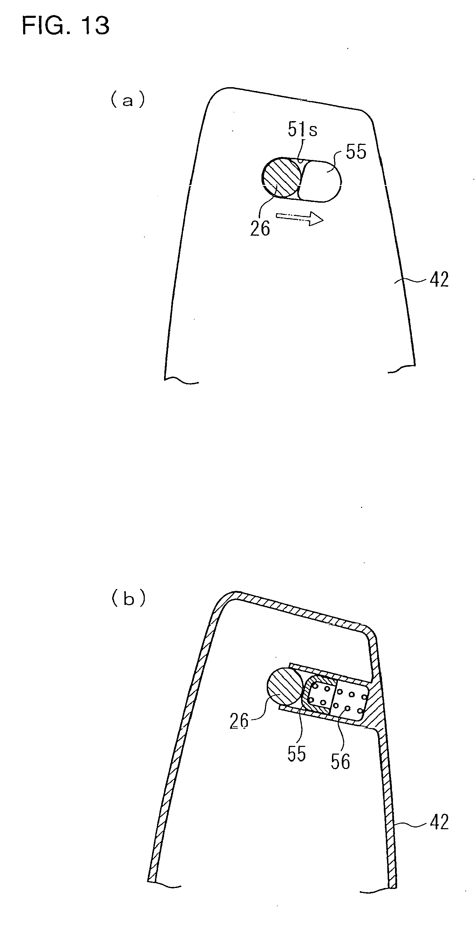

In the embodiment described above, the upright members 42 are provided with the bearing recesses 51. However, it is also possible to provide elongated holes 51s on the upright members 42 extending in the fore-and-aft direction as shown in Figs. 13(a) and 13(b). The hook shafts 26 are inserted into the elongated holes 51s and are pressed rearward by the springs 56 via the shaft holding members 55. When the vehicle collides, the hook shafts 26 compress the springs 56 and move forward as in the case of Fig. 9(b). Accordingly, the seat body 1 rotates in the same manner as the above-described embodiment.

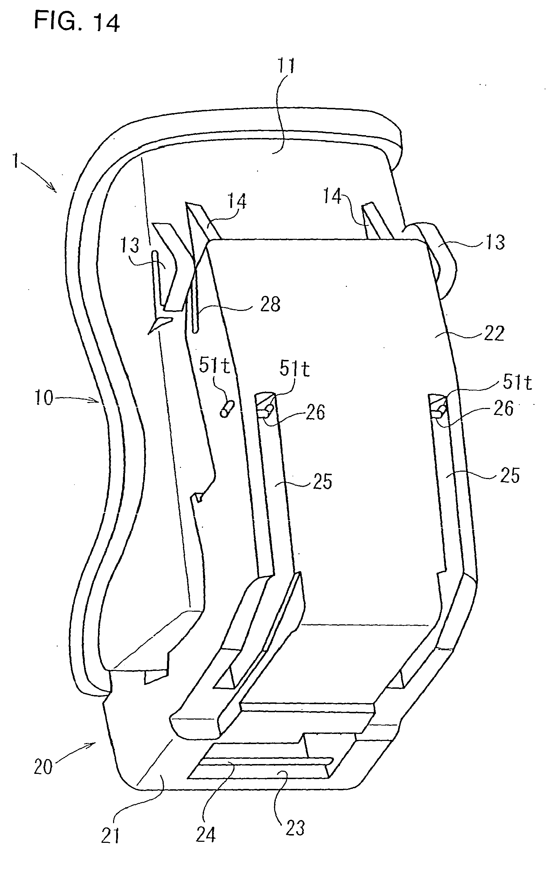

In the present invention, as shown in Fig. 14, it is also possible to provide elongated holes 51t extending in the fore-and-aft direction for allowing the hook shaft 26 to be inserted therein on the shell holder 20 of the seat body 1 and support the hook shafts 26 by the upright members 42 so as to be incapable of moving in the fore-and-aft direction. Pressing members and springs for pressing the hook shaft 26 toward the front are provided in the elongated holes 51t.

When the vehicle collides, the hook shafts 26 compress the springs and move rearward. Accordingly, the seat body 1 rotates in the same manner as in the above-described embodiment.

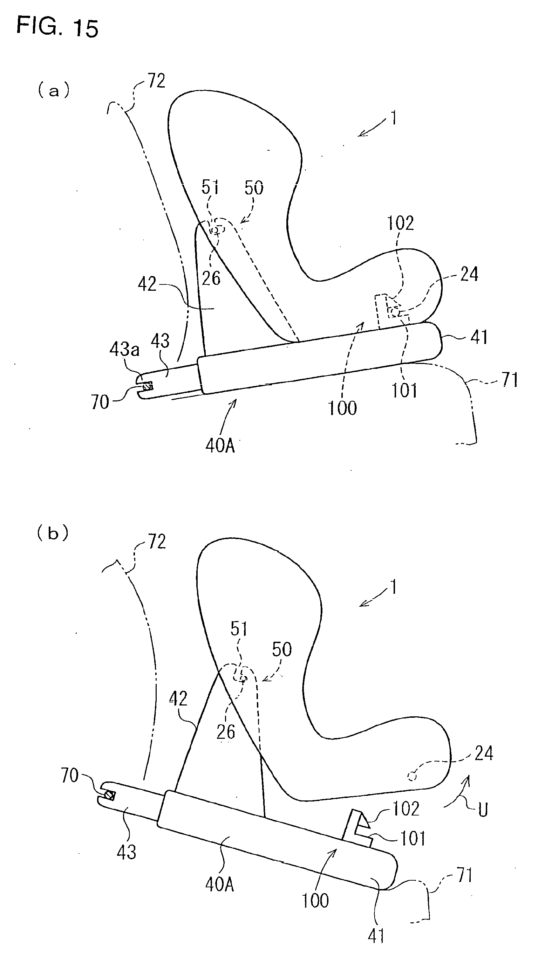

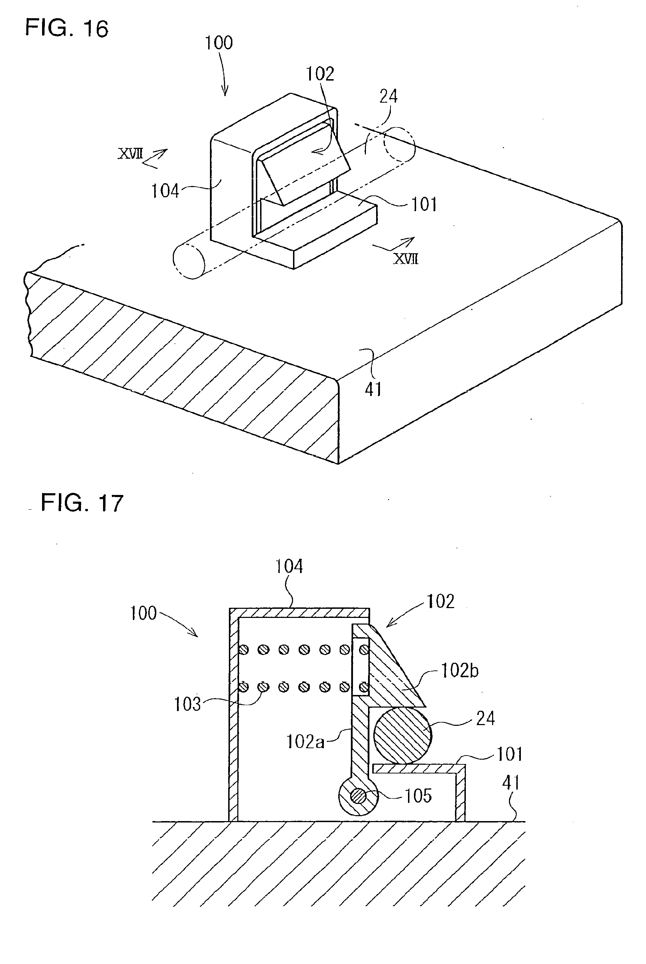

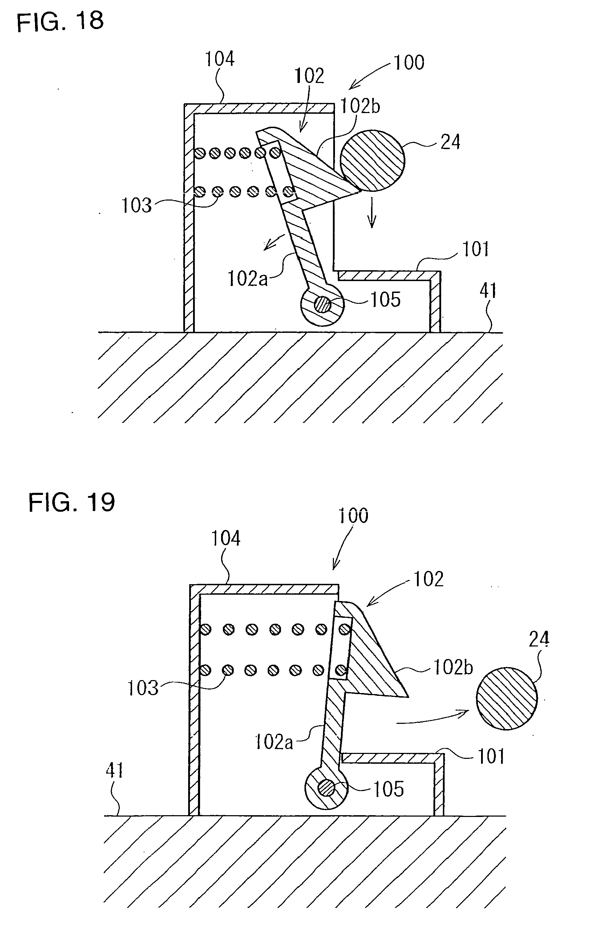

Fig. 15 is an explanatory side view showing an operation of the child car seat according to still another embodiment; Fig. 16 is a perspective view showing the lock mechanism between the seat body and the base of the child car seat; Fig. 17 is a cross-sectional view taken along a line XVII-XVII in Fig. 16; Fig. 18 is a cross-sectional view of the lock mechanism being in the course of locking the seat body to the base; and Fig. 19 is a cross-sectional view of the lock mechanism in a state of being unlocked from the base of the seat body. Fig. 15(a) shows a stationary state in which the vehicle does not collides at the front, and Fig. 15(b) shows a state in which the vehicle collides at the front and hence the seat body rotates toward the front. Figs. 18 and 19 show cross-sections of the same parts as Fig. 17, respectively.

A base 40A of the child car seat in this embodiment also includes the plate-shaped base body 41 arranged on the seat cushion 71 of the vehicle seat, the side towers 42 as the upright members extending upright from both left and right sides of the base body 41, the ISO-FIX arms 43 extending rearward from the both left and right end sides of the rear surface of the base body 41 respectively, the hook mechanisms 50 provided at the upper end portions of the side towers 42, and a lock mechanism 100 provided on the upper surface of the front portion of the base body 41 as shown in Fig. 15. Joint portions 43a with respect to the ISO-FIX anchors of the vehicle are provided at the rear ends of the arms 43.

In this embodiment as well, the seat body 1 is connected to the base 40A by the engagement between the supporting shafts 26 on the side of the seatback section and the recesses 51 at the upper end portions of the respective side towers 42 with the intermediary of the hook mechanisms 50 and the engagement between the lock bar 24 on the front side of the bottom surface and the lock mechanism 100.

The lock mechanism 100 in this embodiment is formed on the upper surface of the base body 41, and includes a base seat portion 101 for receiving the lock bar 24 when the seat body 1 is arranged on the base body 41, an engaging member 102 for locking the lock bar 24 to the base body 41 by engaging the lock bar 24 arranged on the base seat portion 101, and a spring 103 as an urging member for urging the engaging member 102 to take an engaged position with respect to the lock bar 24.

The base seat portion 101 projects upward from the upper surface of the base body 41, and the upper surface is a flat surface. However, it is also possible to provide a shallow recessed groove or the like for catching the lock bar 24 on the upper surface of the base seat portion 101. It is also possible to omit the base seat portion 101, and arrange the lock bar 24 directly on the upper surface of the base body 41.

In this embodiment, a housing 104 in which the engaging member 102 and the spring 103 are stored is provided on the rear portion of the base seat portion 101. A front surface of the housing 104 comprises an opening (reference numeral is omitted) facing the upper surface of the base seat portion 101.

The engaging member 102 includes a base body portion 102a pivotably supported by the housing 104 via an axis 105 at the lower end side so as to be capable of rotating in the fore-and-aft direction, and an overhung portion 102b overhung forward from the upper end side of the base body portion 102a, as shown in Fig. 17 to Fig. 19. By the fore-and-aft rotation (tilting movement) of the base body portion 102a about the axis 105, the overhung portion 102b rises and sets from/into the upper side of the base seat portion 101 via the opening on the front surface of the housing 104. The spring 103 is arranged between the upper end side of the base body portion 102a and a wall surface (reference numeral is omitted) on the rear side of the housing 104 in a pressure accumulated state, and urges the upper end side of the base body portion 102a toward the front.

As shown in the drawings, the upper surface of the overhung portion 102b is an inclined surface (reference numeral is omitted) having a downslope toward the front.

In this lock mechanism 100, when placing the seat body 1 on the base 40A, the lock bar 24 is moved downward from above with respect to the lock mechanism 100. In this case, as shown in Fig. 18, the lock bar 24 abuts against the inclined surface of the overhung portion 102b of the engaging member 102, and moves downward while pushing the overhung portion 102b backward (in the housing 104) against the urging force from the spring 103. When the lock bar 24 is moved downward to a level lower than the overhung portion 102b, the overhung portion 102b is restored toward the front by the urging force of the spring 103 and is engaged with the lock bar 24 from above as shown in Fig. 17.

This embodiment is configured in such a manner that the lock bar 24 is locked with respect to the base body 41 by the overhung portion 102b being engaged with the lock bar 24 from above and pressing the lock bar 24 against the base seat portion 101. However, it is also possible to configure the lock bar 24 to be locked with respect to the base body 41 simply by the overhung portion 102b by being caught on lock bar 24.

As shown in the drawings, the lower surface of the overhung portion 102b is a flat surface in this embodiment, however, the lower surface of the overhung portion 102b may be formed with a shallow recess groove or the like with which the lock bar 24 is hooked.

In a case in which the forward force equal to or larger than a predetermined magnitude is applied to the seat body 1 in a state in which the lock bar 24 is engaged with the base body 41 by this lock mechanism 100, the lock bar 24 comes out toward the front from the lower side of the overhung portion 102b, whereby being unlocked with respect to the base 40A on the front side of the seat body 1, aw shown in Fig. 19.

Other structure of the child car seat provided with the lock mechanism 100 are the same as embodiments shown in Fig. 1 to Fig. 12 described above, and the same reference numerals as in Fig. 1 to Fig. 12 represent the same parts in Fig. 15 to Fig. 19.

In the child car seat provided with the lock mechanism 100 in this arrangement, when installing the seat body 1 on the base 40A, the lock bar 24 may be engaged with the lock mechanism 100 by engaging the supporting shafts 26 on the side of the seatback section of the seat body 1 with the recesses 51 of the upper end portions of the respective side towers 42 of the base 40A, and then moving the front side of the seat body 1 downward onto the base 40A.

In contrast, it is possible to engage the supporting shafts 26 on the side of the seatback section with the recesses 51 of the upper end portions of the respective side towers 42 by engaging the lock bar 24 on the front side of the seat body 1 with the lock mechanism 100, and then moving the side of the seatback section of the seat body 1 downward onto the base 40A.

Alternatively, it is possible to move the front side and the seatback section side of the seat body 1 downward onto the base 40A simultaneously to perform the engagement of the lock bar 24 with the lock mechanism 100 and the engagement of the supporting shafts 26 with the recesses 51 at the upper end portions of the respective side towers 42 simultaneously.

As described thus far, in the child car seat in this embodiment, since connecting sequence between the seat body 1 and the base 40A is highly flexible, a connecting operation of the seat body 1 and the base 40A can be carried out easily.

The respective embodiments shown above are simply examples of the present invention, and the present invention is not limited to the respective embodiments shown above.

## Claims

1. A child car seat comprising:
a base (40; 40A) arranged on a seat cushion (71) of a vehicle and connected to an anchor provided on the vehicle; and
a seat body (1) rotatably supported with respect to the base (40; 40A) by a supporting shaft (26) having an axial line oriented in the lateral direction of the child car seat, the base (40; 40A) being formed with upright members (42) respectively extending upright from both left and right sides of the base (40; 40A), the seat body (1) being rotatably supported by upper portions of the upright members (42) via the supporting shaft (26), and the seat body (1) being locked with respect to the base by a lock mechanism (60; 100) to be prevented from rotating,
**characterized in that** the lock mechanism (60; 100) is adapted to unlock when a forward force equal to or larger than a predetermined magnitude is applied to the seat body (1) to allow the seat body (1) to rotate.

2. The child car seat according to Claim 1, **characterized in that** the lock mechanism comprises:
an engaged member (24) provided on the seat body (1);
an engaging member (63; 102) provided on the base (40; 40A) and being displaceable between a posture of engaging with the engaged member (24) and a disengaging posture; and
an urging member (65; 103) for urging the engaging member (63; 102) to bring the engaging member (63; 102) into the engaging posture.

3. The child car seat according to Claim 2, **characterized in that** the engaging member (63) is displaced against an urging force by the urging member (65) when the forward force equal to or large than the predetermined magnitude is applied to the seat body (1) to disengage the engaging member (63) from the engaged member (24).

4. The child car seat according to Claim 2 or 3, **characterized in that** the engaged member is a lock bar (24) provided on a bottom surface portion of the seat body (1) and extending in the lateral direction of the child car seat,
**in that** the engaging member (63) is rotatably supported to the base (40) by an axis (64) having an axial line oriented in the lateral direction of the child car seat, **in that** the engaging member (63) is provided with a lock bar receiving groove (62a) extending in parallel with the axial line of the axis (64), and
**in that** the seat body (1) is locked when the lock bar (24) is engaged with the lock bar receiving groove (62a) and is located at a level lower than the axis (64) and the seat body (1) is unlocked when the engaging member (63) is rotated so that the lock bar (24) is positioned in front of the axis (64).

5. The child car seat according to Claim 4, **characterized in that** a projecting portion (61) projecting upward is provided on an upper surface of the base (40), the engaging member (63) is arranged inside the projecting portion (61), and
**in that** the projecting portion (61) is formed with a slit (62) so as to allow the lock bar (24) to enter therein and to be engaged with the engaging member (63).

6. The child car seat according to Claim 5, **characterized in that** a recess (23) for allowing the projecting portion (61) to enter therein is formed on a bottom surface of the seat body (1), and
**in that** the lock bar (24) is provided so as to extend across the recess (23).

7. The child car seat according to Claim 5 or 6, **characterized in that** the slit (62) is provided on a front surface and both side surfaces of the projecting portion (61) in sequence, and
**in that** the slit comprises an inclined slit portion (62s) inclining downward as it goes toward the rear and an innermost slit portion (62t) continuing from the inclined slit portion (62s) and extending rearward substantially in parallel with the fore-and-aft direction of the base (40) on the side surfaces of the projecting portion (61).

8. The child car seat according to any one of Claims 1 to 7, **characterized in that** the supporting shaft (26) is provided on the seat body (1), the upright member (42) is formed with a bearing recess (51) for receiving the supporting shaft (26) from above,
**in that** a bottom portion of the bearing recess (51) extends in the fore-and-aft direction so as to allow the supporting shaft (26) to move forward when the seat body (1) is moved forward,
**in that** an entrance of the bearing recess (51) is smaller in width in the fore-and-aft direction than the bottom portion and
**in that** a pressing member (55, 56) is provided for pressing the supporting shaft (26) in the bearing recess (51) rearward.

9. The child car seat according to any one of Claims 1 to 7, **characterized in that** the supporting shaft (26) is provided on the seat body (1),
**in that** the upright member (42) is formed with an elongated hole (51s) extending in the fore-and-aft direction for allowing insertion of the supporting shaft (26), and
**in that** a pressing member (55, 56) is provided for pressing the supporting shaft in the elongated hole (51s) toward the rear.

10. The child car seat according to any one of Claims 1 to 7, **characterized in that** the supporting shaft (26) is provided on the seat body (1),
**in that** the supporting shaft (26) is inserted through an elongated hole (51t) formed on the seat body (1) so as to extend in the fore-and-aft direction, and
**in that** a pressing member is provided for pressing the supporting shaft in the elongated hole toward the front.

11. The child car seat according to Claim 2, **characterized in that** the engaged member is a lock bar (24) provided on the bottom surface portion of the seat body (1) and extending in the lateral direction of the child car seat,
**in that** the engaging member (102) comprises a base body portion (102a) supported by the base (40A) at the lower end thereof so as to be capable of rotating in the fore-and-aft direction and an overhung portion (102b) overhung from the upper end side of the base body portion (102a) toward the front,
**in that** an upper surface of the overhung portion (102b) is an inclined surface having a downslope toward the front,
**in that** the urging member (103) urges the upper end side of the base body portion (102a) toward the front, and
**in that** when the lock bar (24) is moved downward with respect to the engaging member (102) from above, the lock bar (24) comes into abutment with the inclined surface of the overhung portion (102b) and is moved downward to a level lower than the overhung portion (102b) while pushing the overhung portion (102b) backward against the urging force from the urging member (103), and then the overhung portion (102b) is restored toward the front by the urging force of the urging member (103) and is engaged with the upper side of the lock bar (24), whereby the seat body (1) is locked with respect to the base (40A).
